# EUROPÄISCHE PATENTSCHRIFT

(11) **EP 2 195 204 B1**
(45) Veröffentlichungstag und Bekanntmachung des Hinweises auf die Patenterteilung: **03.10.2012**
(21) Anmeldenummer: 08804733.7
(22) Anmeldetag: 25.09.2008
(51) Int. Cl.: B60R 21/261, B60R 21/264, B60R 21/217

(54) **AUFBLASEINRICHTUNG FÜR EIN AIRBAGMODUL**
INFLATION DEVICE FOR AN AIRBAG MODULE
DISPOSITIF DE GONFLEMENT D'UN MODULE SAC GONFLABLE

(30) Priorität: 26.09.2007 DE 102007046824
(43) Veröffentlichungstag der Anmeldung: 16.06.2010
(73) Patentinhaber: Takata AG, 63743 Aschaffenburg (DE)
(72) Erfinder: WINDHAUSEN, Björn, 63773 Goldbach (DE); KIMMICH, Stephen, 63785 Obernburg (DE)
(74) Vertreter: Staroske, Sandro
(86) Internationale Anmeldenummer: PCT/EP2008/062836
(87) Internationale Veröffentlichungsnummer: WO 2009/043791

(56) Entgegenhaltungen:
- EP-A- 0 546 791
- EP-A- 0 677 433
- EP-A- 0 680 853
- US-A- 4 158 696
- US-A- 5 397 544
- US-A- 5 899 494

## Beschreibung

Die Erfindung betrifft eine Aufblaseinrichtung für ein Airbagmodul eines Kraftfahrzeugs nach dem Oberbegriff des Anspruchs 1.

Eine derartige Aufblaseinrichtung umfasst eine Brennkammer zur Aufnahme eines Gassatzes, aus dem (durch Auslösen der Aufblaseinrichtung mittels einer hierfür vorgesehenen Zündeinrichtung) ein Gas zum Aufblasen eines Gassackes des Airbagmodules erzeugbar ist, wobei der Gassatz verbrennt (Abbrand des Gassatzes); und sie umfasst weiterhin ein Brennkammergehäuse, das den Innenraum der Brennkammer umschließt, in dem der Gassatz aufgenommen ist.

Es ist bekannt, zum Aufblasen eines Gassackes eines Airbagmodules in einem Kraftfahrzeug, der im aufgeblasenen Zustand ein Gaskissen für einen zu schützenden Fahrzeuginsassen bildet, einen Gasgenerator zu verwenden, bei dem die zum Aufblasen des Gassackes dienenden Gase durch Abbrand eines Gassatzes in einer Brennkammer des Gasgenerators erzeugt werden und anschließend aus dem Gasgenerator in den aufzublasenden Gassack geleitet werden. Aufgrund des hohen Druckes, der beim Erzeugen eines Gases durch Abbrand des Gassatzes in der Brennkammer auftritt, müssen die die Brennkammer begrenzenden Gehäusewände des Brennkammergehäuses hinreichend stabil aufgeführt sein, um dem in der Brennkammer wirkenden Innendruck Stand halten zu können. Hiermit sind ein erhöhtes Gewicht des Gasgenerators sowie entsprechende Materiälkosten verbunden.

Ein derartiges Modul ist aus der EP 0680853 bekannt.

Der Erfindung liegt das Problem zugrunde, eine Aufblaseinrichtung der eingangs genannten Art im Hinblick auf die Ausgestaltung der Brennkammer weiter zu verbessern.

Dieses Problem wird erfindungsgemäß durch die Schaffung einer Aufblaseinrichtung mit den Merkmalen des Patentanspruchs 1 gelöst.

Danach ist das Brennkammergehäuse so ausgeführt, dass es dem Druck, der in der Brennkammer bei bestimmungsgemäßer Erzeugung eines Gassackes durch Abbrand eines Gassatzes auftritt, nicht Stand halten kann, und das Brennkammergehäuse ist von einer Gehäuseaufnahme derart umschlossen, dass es sich an der Gehäuseaufnahme abstützt, um ein Verformen oder Zerbersten des Brennkammergehäuses bei Erzeugung eines Gases in der Brennkammer zu verhindern. Des Weiteren ist die Gehäuseaufnahme Bestandteil eines Modulgehäuses, das zur Aufnahme mindestens eines Gassackes des Airbagmodules dient.

Dass die Gehäuseaufnahme Bestandteil des Modulgehäuses ist, hat unter anderem den Vorteil, dass keine zusätzlichen Bauteile, die für die Anbindung des Brennkammergehäuses an das Airbagmodul sonst benötigt werden, eingesetzt werden müssen. Dies führt zu einer Materialeinsparung gegenüber herkömmlichen Aufblaseinrichtungen. Bei einer Integration des Brennkammergehäuses in einer Gehäuseaufnahme, die Bestandteil des Modulgehäuses ist, werden bei Zündung des Gassatzes Leistungsverluste der Aufblaseinrichtung gegenüber dem Fall, in dem zwischen Gasgenerator und Modulgehäuse eine externe Anbindung notwendig ist, verringert.

Damit ermöglicht die erfindungsgemäße Gestaltung der Aufblaseinrichtung eine entsprechend dünnwandige Ausgestaltung des Brennkammergehäuses, z. B. mit einer Wandstärke von weniger als 2 mm, insbesondere mit einer Wandstärke von weniger als 1 mm, ohne dass das Brennkammergehäuse aufgrund des bei Erzeugung eines Gassackes in der Brennkammer wirkenden Druckes substanziell verformt oder gar zerstört würde, da sich die Brennkammer ja an der Brennkammeraufnahme abstützt.

Die Gehäuseaufnahme umschließt das Brennkammergehäuse bevorzugt derart, dass sämtliche Bereiche des Brennkammergehäuses, die keine Austrittsöffnungen zum Austritt von Gas aus der Brennkammer bilden (sollen), an der Gehäuseaufnahme anliegen und von dieser abgestützt sind. Eine derartig vollflächige Abstützung des Brennkammergehäuses durch die Gehäuseaufnahme muss aber nicht in jedem Fall notwendig sein; ggf. können auch Teilbereiche des Brennkammergehäuses nicht an der Gehäuseaufnahme abgestützt sein, etwa wenn die Abstützung eines Teiles des Brennkammergehäuses an der Gehäuseaufnahme ausreicht, um das Brennkammergehäuse insgesamt zu stabilisieren, so dass es dem Innendruck der Brennkammer bei Erzeugung heißer Gase Stand halten kann (was es ohne die Abstützung an der Gehäuseaufnahme nicht könnte).

Zur Integration der Gehäuseaufnahme, die die erforderliche Stabilität der Brennkammer herbeiführt, in einem Modulgehäuse eines Airbagmodules, das zur Aufnahme mindestens eines Gassackes des Airbagmodules dient, kann - beispielsweise im Bereich des Gehäusebodens - eine Aufnahme für die Brennkammer angeformt sein, an der das Brennkammergehäuse mit seiner Außenwand anliegt und an der es sich abstützen kann. Dabei kann eine derartige Gehäuseaufnahme bei einem Front-Airbagmodul beispielsweise an der Armaturentafel und bei einem Seitenairbagmodul an einer Tür- oder Dachhimmelverkleidung eines Kraftfahrzeugs ausgebildet sein.

Das Brennkammergehäuse kann insbesondere aus Metall, z. B. Aluminium, Stahl, Messing, Kupfer, jeweils vorteilhaft in Form von Blech, oder einer Legierung, bestehen, während für die Gehäuseaufnahme beispielsweise Kunststoff und Magnesium geeignete Materialien sind.

Die Gehäuseaufnahme ist in ihrer Geometrie derart an die Außenkontur des Brennkammergehäuses angepasst, dass die erforderliche Abstützwirkung erzielt werden kann. Bei einer rohrförmigen, insbesondere hohlzylindrischen, Ausgestaltung des Brennkammergehäuses ist somit die Verwendung einer Gehäuseaufnahme zweckmäßig, die eine im Querschnitt ringförmig umlaufende Innenwand aufweist, welche sich an die Außenwand des Brennkammergehäuses anlegen kann.

Die dünnwandige Ausbildung des Brennkammergehäuses, derart dass sie dem in der Brennkammer beim Erzeugen eines Gases auftretenden Innendruck allein nicht Stand halten kann, lässt sich weiterhin dazu nutzen, um erst bei Erzeugung eines Gases in der Brennkammer (durch Abbrand des hierfür vorgesehenen Gassatzes) Austrittsöffnungen im Brennkammergehäuse zu bilden, durch die hindurch das in der Brennkammer erzeugte Gas zum Aufblasen eines Gassackes freigesetzt werden kann. So lassen sich definierte, lokal begrenzte Austrittsöffnungen im Brennkammergehäuse etwa dadurch bilden, dass sich das Brennkammergehäuse an der Gehäuseaufnahme im Wesentlichen vollflächig abstützt, wobei jedoch solche Teilbereiche (Austrittsbereiche) des Brennkammergehäuses nicht abgestützt werden, die beim Erzeugen eines Gases in der Brennkammer Austrittsöffnungen (durch Zerbersten der entsprechenden Teilbereiche des Brennkammergehäuses) bilden sollen. Dies kann konkret etwa dadurch realisiert werden, dass in der Gehäuseaufnahme Durchtrittsöffnungen für das in der Brennkammer erzeugte Gas vorgesehen sind, wobei die Durchtrittsöffnungen der Gehäuseaufnahme an Austrittsbereichen des Brennkammergehäuses münden. Diese Austrittsbereiche des Brennkammergehäuses sind somit dadurch charakterisiert, dass ihnen kein Material der Gehäuseaufnahme gegenüberliegt, an dem sie sich abstützen können, sondern vielmehr die Stirnseite einer Durchtrittsöffnung der Gehäuseaufnahme. Hierdurch kann das Material des Brennkammergehäuses an jenen Austrittsbereichen beim Auftreten eines entsprechend hohen Innendruckes in der Brennkammer gezielt zerbersten, wodurch die gewünschten Austrittsöffnungen in dem Brennkammergehäuse gebildet werden.

So kann eine Brennkammer zur Verfügung gestellt werden, deren Brennkammergehäuse, ggf. zusammen mit weiteren Komponenten, wie z. B. einem Anzündergehäuse, die Brennkammer anfangs gasdicht umschließt.

Für einen möglichst einfachen Aufbau des Brennkammergehäuses ist es weiterhin zweckmäßig, eine Filtereinrichtung, mittels der die in der Brennkammer erzeugten Gase gefiltert werden, außerhalb der Brennkammer anzuordnen, und zwar insbesondere beabstandet von der Brennkammer, z. B. an der Gehäuseaufnahme, insbesondere an einer der Brennkammer abgewandten Außenseite (Außenwand) der Gehäuseaufnahme, z. B. hinter den Durchtrittsöffnungen der Gehäuseaufnahme, durch die hindurch die in der Brennkammer erzeugten Gase in einen aufzublasenden Gassack geleitet werden.

Der Filter kann dabei baulich mit einem Diffusor zu einer Baueinheit zusammengefasst sein, die mittels geeigneter Befestigungselemente, z. B. in Form von Schrauben, an einer zugeordneten Komponente der Aufblaseinrichtung, insbesondere an der Gehäuseaufnahme festgelegt wird, wobei der Diffusor zur gezielten Einleitung des in der Brennkammer erzeugten Gases in einen aufzublasenden Gassack dient.

Auch eine Drosselvorrichtung zum Steuern des Abbrandes des Gassatzes beim Erzeugen eines Gases lässt sich vorteilhaft außerhalb der Brennkammer anbringen, z. B. an der Gehäuseaufnahme, indem die Durchtrittsöffnungen der Gehäuseaufnahme vom Querschnitt her gezielt so ausgelegt werden, dass ein vorgebbarer, den Abbrand in der Brennkammer steuernder Gasstrom aus der Brennkammer in die Umgebung möglich ist.

Als Zündeinrichtung zum Auslösen der Aufblaseinrichtung, um eine Erzeugung eines Gases durch Abbrand des in der Brennkammer vorgesehenen Gassatzes herbeizuführen, kann eine von der Brennkammer separate Baueinheit dienen, die in geeigneter Weise mit der Brennkammer, insbesondere dem Brennkammergehäuse, zu verbinden ist und die beispielsweise gemeinsam mit dem Brennkammergehäuse in einer gemeinsamen Gehäuseaufnahme untergebracht sein kann.

Weitere Einzelheiten und Vorteile der Erfindung werden bei der nachfolgenden Beschreibung von Ausführungsbeispielen anhand der Figuren deutlich werden.

Es zeigen:
- Fig. 1 a: eine perspektivische Explosionsdarstellung einer an einem Modulgehäuse angeordneten Aufblaseinrichtung für ein Airbagmodul eines Kraftfahrzeugs;
- Fig. 1b: die Anordnung aus Fig. 1a in zusammengebautem Zustand;
- Fig. 2a: einen Querschnitt durch die Explosionsdarstellung gemäß Fig. 1 a;
- Fig. 2b: einen Querschnitt durch die Darstellung aus Fig. 1b zusammen mit einem durch die Aufblaseinrichtung aufblasbaren Gassack;
- Fig. 3a: einen perspektivischen Längsschnitt durch die Anordnung aus Fig. 1 b;
- Fig. 3b: einen Längsschnitt durch die Anordnung aus Fig. 1 b in Seitenansicht;
- Fig. 4: eine Abwandlung des Ausführungsbeispieles aus den Fig. 1a bis 3b.

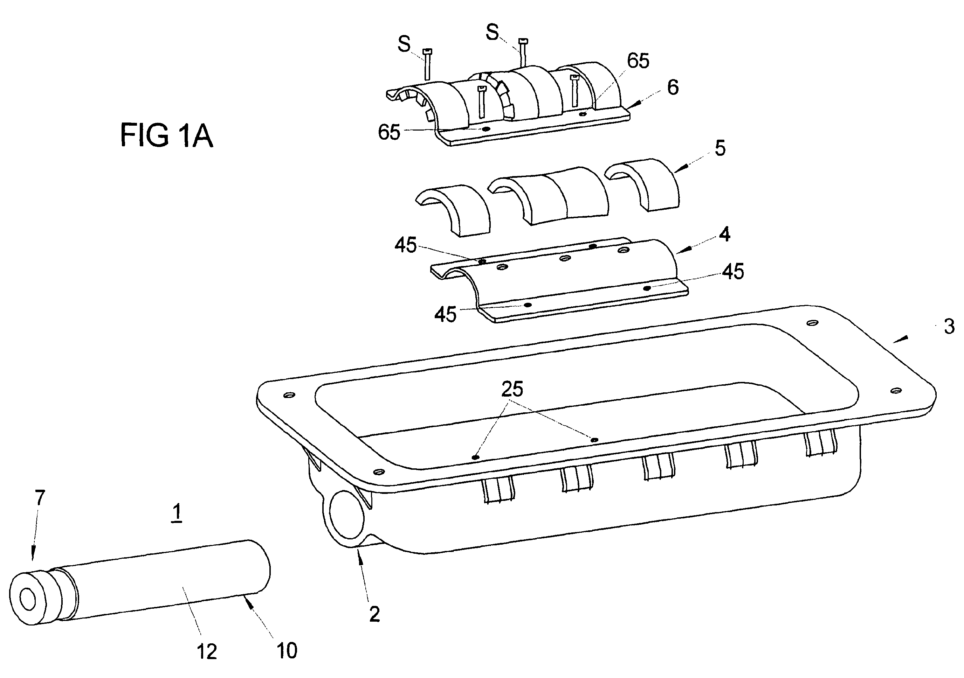

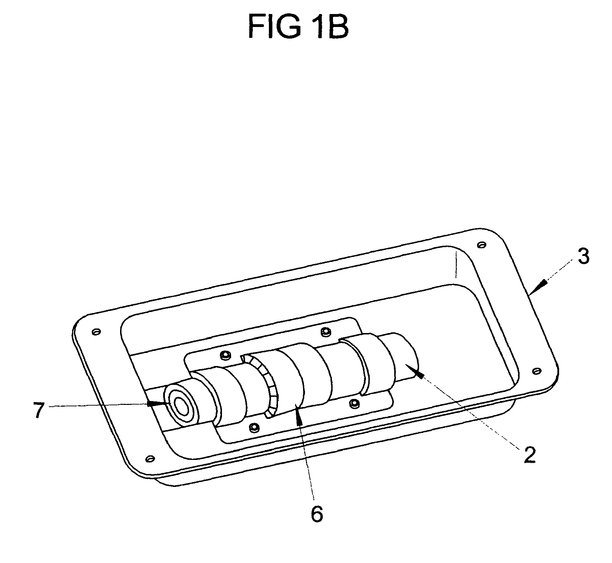

In den Fig. 1a bis 3b ist eine an einem Modulgehäuse 3 eines Airbagmodules angeordnete Aufblaseinrichtung zum Aufblasen eines Gassackes des Airbagmodules dargestellt, die als eine erste wesentliche Komponente eine Brennkammer 1 umfasst, die ein entlang einer Längsachse A erstrecktes rohrförmiges bzw. genauer hohlzylindrisches Brennkammergehäuse 10 aufweist.

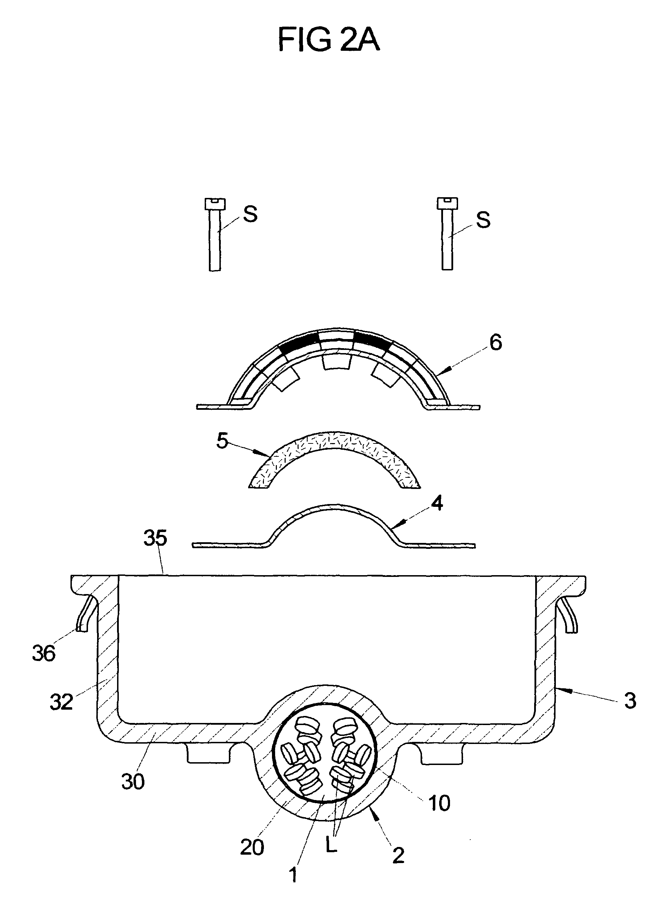

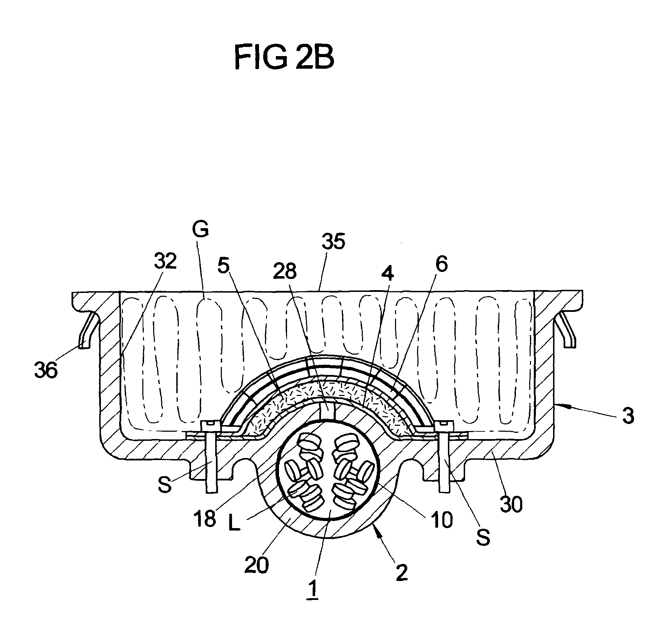

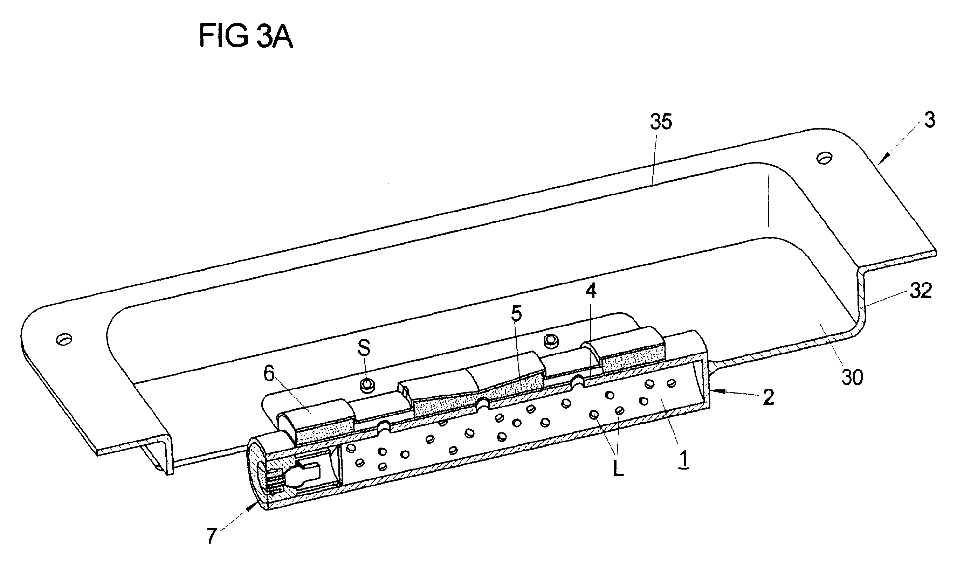

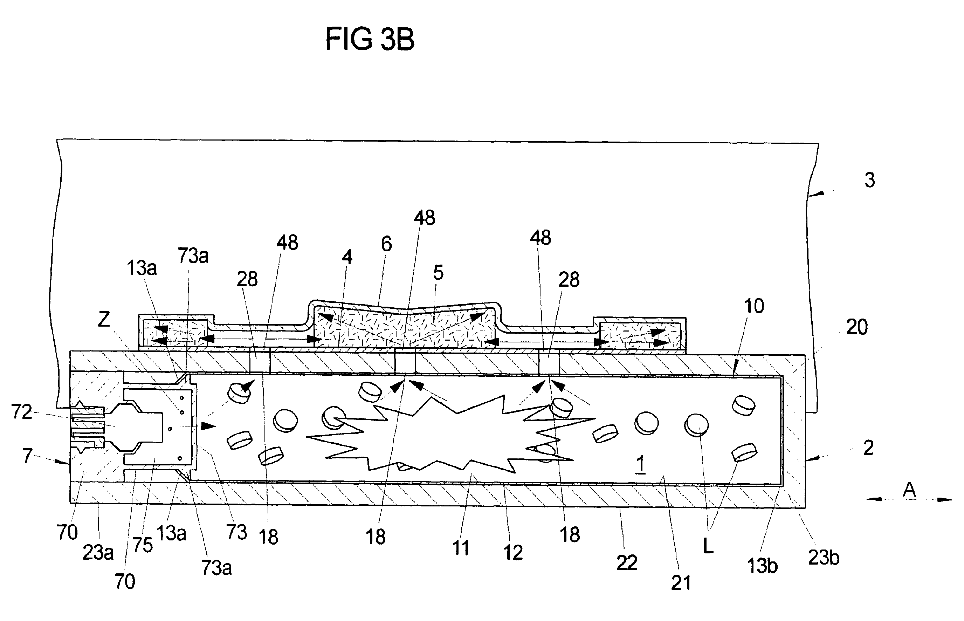

Das Brennkammergehäuse 10 umschließt einen Innenraum, in dem ein Gassatz in Form einer Feststoffladung L angeordnet ist, aus dem ein Gas zum Aufblasen eines in Figur 2b strichpunktiert als (gefaltetes) Gassackpaket angedeuteten Gassackes G des Airbagmodules erzeugbar ist. Dabei verlaufen die Falten bzw. Faltlinien des Gassackes G hier beispielhaft in Längsrichtung, d.h. senkrecht zu der Querschnitts-Ebene der Figur 2b; alternativ können erstere auch parallel zu der Schnittebene der 2b verlaufen und senkrecht zu der Längsschnitts-Ebene der Figur 3b erstreckt sein.

Das Brennkammergehäuse 10 erstreckt sich (entlang der Rohrachse A) zwischen einer ersten Stirnseite 13a und einer zweiten Stirnseite 13b und weist einen Mantel mit einer dem Innenraum zugewandten inneren Oberfläche 11 und einer dem Innenraum des Brennkammergehäuses abgewandten äußeren Oberfläche 12 auf. Die Wandstärke des Brennkammergehäuses 10, d. h. der kürzeste Abstand zwischen dessen innerer Oberfläche 11 und dessen äußerer Oberfläche 12 ist so gering bemessen, dass das Brennkammergehäuse 10 dem Innendruck nicht Stand halten kann, der in der Brennkammer 1 auftritt, wenn durch Verbrennen (Abbrand) des in der Brennkammer 1 angeordneten Gassatzes in Form einer Feststoffladung L ein Gas erzeugt wird. Hierzu ist bei einer aus Metall, insbesondere aus Aluminium-, Stahl-, Messing- oder Kupferblech oder einer Legierung, bestehenden Brennkammergehäuse 10 eine Wandstärke von weniger als 2 mm, insbesondere weniger als 1 mm vorgesehen.

Dies bedeutet im vorliegenden Ausführungsbeispiel, dass das Brennkammergehäuse 1 für sich betrachtet beim Abbrand des Gassatzes in Form einer Feststoffladung L und der hiermit einhergehenden Erzeugung eines (heißen) Gases zum Aufblasen eines Gassackes durch dem in der Brennkammer 1 auftretenden Gasdruck zerstört würde, insbesondere durch Zerbersten. Dies wird hier jedoch dadurch verhindert, dass die Brennkammer 1 mit ihrem rohrförmigen Gehäuse 10 in einer Gehäuseaufnahme 2 aufgenommen ist, die einen einstückigen Bestandteil eines aus Kunststoff bestehenden Modulgehäuses 3 des Airbagmodules bildet.

Das Modulgehäuse 3 umfasst eine Bodenfläche 30 und hiervon abstehende Seitenwände 32 und bildet eine auf der Oberseite bzw. Deckfläche 35 offene Aufnahme für einen zu einem Gassackpaket zusammengefalteten Gassack des Airbagmodules. Die der Bodenfläche 30 gegenüberliegende, offene Deckfläche 35 des Modulgehäuses 3 wird durch einen in den Figuren nicht dargestellten Gehäusedeckel verschlossen, der an Rastelementen 36 des Modulgehäuses 3, welche hier von dessen Seitenwänden 32 vorspringen, verrastbar ist.

An dem Gehäuseboden 30 des Modulgehäuses 3 ist einstückig eine rohrförmige Gehäuseaufnahme 2 angeformt, die ebenso wie die übrigen Bereiche des Modulgehäuses 3 aus Kunststoff besteht und die eine im Querschnitt ringförmig umlaufende Begrenzungswand 20 mit einer dem in der Gehäuseaufnahme 2 aufgenommenen Brennkammergehäuse 10 zugewandten inneren Oberfläche 21 und einer dem Brennkammergehäuse 10 abgewandten äußeren Oberfläche 22 aufweist.

Die rohrförmige bzw. genauer hohlzylindrische Gehäuseaufnahme 2 erstreckt sich ebenso wie die Brennkammer 1 zwischen einer ersten Stirnseite 23a und einer zweiten Stirnseite 23b, wobei sie an der ersten Stirnseite 23a zum Einführen der Brennkammer 1 offen und an der zweiten Stirnseite 23b verschlossen ist. Die Gehäuseaufnahme 2 ist an ihrer der Brennkammer 1 zugewandten inneren Oberfläche 21 derart ausgeführt, dass die Brennkammer 1 mit der äußeren Oberfläche 12 ihres Brennkammergehäuses 10 sowohl im Bereich ihres Mantels als auch im Bereich der zweiten Stirnseite 13b an der inneren Oberfläche 21 der Gehäuseaufnahme 2 großflächig (im Wesentlichen vollflächig) anliegt und sich hieran nach außen abstützt. Hierdurch ist die Brennkammer 1 bzw. deren Brennkammergehäuse 10 gegen Deformation und Zerbersten unter der Wirkung eines in der Brennkammer 1 erzeugten Gases geschützt.

Im Bereich der offenen ersten Stirnseite 23a der Gehäuseaufnahme 2 ist eine Zündeinrichtung 7 zum Zünden des in der Brennkammer 1 vorgesehenen Gassatzes in Form einer Feststoffladung L angeordnet. Hierzu ist die Gehäuseaufnahme 2 an ihrer ersten Stirnseite 23a mit einem Anzündergehäuse 70 verschlossen, das einerseits den Anzünder 72 der Zündeinrichtung 7 aufnimmt und das andererseits eine optional mit einer Zündmischung Z gefüllte Zündkammer 75 umschließt. Eine der zweiten Stirnseite 13a des Brennkammergehäuses 10 zugewandte Stirnseite 73 des Anzündergehäuses 70 dient dabei zum Verschließen der Brennkammer 1 an ihrer ersten Stirnseite 13a, wobei an der ersten Stirnseite 13a des Brennkammergehäuses 10 abgewinkelte Befestigungslaschen des Brennkammergehäuses 10 zugeordnete Befestigungsvorsprünge 73a am Anzündergehäuse 70 umgreifen.

Die Zündeinrichtung 7 ist dabei eine von der Brennkammer 1 bzw. deren Brennkammergehäuse 10 separate Baueinheit, die mit ihrer der Brennkammer 1 zugewandten Stirnseite 73 des Anzündergehäuses 70 mit der Brennkammer 1 bzw. dem Brennkammergehäuse 10 über die erwähnten Befestigungslaschen an der ersten Stirnseite 13a des Brennkammergehäuses 10 und die zugeordneten Befestigungsvorsprünge 73a des Anzündergehäuses 70 verbunden ist.

Die Befestigungslaschen können entfallen, wenn dem Brennkammergehäuse 10 an der ersten Stirnseite 13a ein eigener Verschluss, z.B. in Form eines (mit dem dichtend Brennkammergehäuse 10 verbundenen, insbesondere vercrimpten) stirnseitigen Deckels, zugeordnet ist. Dieser kann (z.B. unter Verwendung der oben für das Brennkammergehäuse angegebenen Materialien) derart dünnwandig ausgeführt sein, dass er bei Auslösung der Aufblaseinrichtung durch den zünderseitigen Druck durchstoßen wird, so dass sich der in der Brennkammer 1 vorgesehene Gassatz zünden lässt.

Im Ergebnis umschließt das Brennkammergehäuse 10 zusammen mit der besagten Stirnseite 73 des Anzündergehäuses 70 den die Feststoffladung L aufnehmenden Innenraum der Brennkammer 1 gas- und feuchtigkeitsdicht. Insbesondere sind bei dem in den Fig. 1a bis 3b gezeigten Ausführungsbeispiel auch keine von vornherein bestehenden Austrittsöffnungen in dem Brennkammergehäuse 10 vorgesehen, durch die hindurch in der Brennkammer 1 erzeugtes Gas zum Aufblasen eines Gassackes entweichen könnte.

Jedoch sind in der Begrenzungswand 20 der Gehäuseaufnahme 2, genauer in deren Mantel, mehrere Durchtrittsöffnungen 28 vorgesehen, durch die hindurch aus der Brennkammer 1 austretendes Gas in einen im Modulgehäuse 3 angeordneten, aufzublasenden Gassack strömen kann. Diese Durchtrittsöffnungen erstrecken sich jeweils von der der Brennkammer 1 zugewandten inneren Oberfläche 21 zu der der Brennkammer 1 abgewandten äußeren Oberfläche 22 der Gehäuseaufnahme 2 und weisen an deren äußerer Oberfläche 22 in das Innere des Modulgehäuses 3, wo der aufzublasende Gassack anzuordnen ist.

Da das Brennkammergehäuse 10 in den Teilbereichen (Austrittsbereichen), an die die Durchtrittsöffnungen 28 der Gehäuseaufnahme 2 grenzen, nicht durch die Gehäuseaufnahme 2 abgestützt ist, zerbirst das Brennkammergehäuse 10 in diesen an die Durchtrittsöffnungen 28 grenzenden Teilbereichen (Austrittsbereichen), wenn der Innendruck der Brennkammer 1 bei Abbrand des Gassatzes in Form einer Feststoffladung L und der hiermit einhergehenden Erzeugung eines Gases einen bestimmten Wert überschreitet. Hierdurch werden in dem Brennkammergehäuse 10 Austrittsöffnungen 18 gebildet, die mit den gehäuseaufnahmeseitigen Durchtrittsöffnungen 28 fluchten. Somit kann in der Brennkammer 1 erzeugtes Gas durch die erst bei Erzeugung des Gases gebildeten Austrittsöffnungen 18 des Brennkammergehäuses 10 und durch die in Gasflussrichtung dahinter liegenden Durchtrittsöffnungen 28 der Gehäuseaufnahme 2 in das Innere des Modulgehäuses 3 geleitet werden, wo es zum Aufblasen eines dort angeordneten Gassackes dienen kann.

Die Gase strömen allerdings beim Verlassen der Durchtrittsöffnungen 28 der Gehäuseaufnahme 2 nicht unmittelbar in den aufzublasenden Gassack, sondern werden zunächst noch durch ein Hitzeschild-Filter-Diffusor-Ensemble geleitet, das ein Hitzeschild 4, einen Filter 5 und einen Diffusor 6 umfasst.

Das Hitzeschild 4 liegt im Bereich der Durchtrittsöffnungen 28 unmittelbar an der äußeren Oberfläche 20 der Gehäuseaufnahme 2 auf und weist mit jenen Durchtrittsöffnungen 28 fluchtende bzw. diese überdeckende Durchgangsöffnungen 48 auf. In Gasflussrichtung hinter dem Hitzeschild 4 ist eine aus einem Diffusor 6 und einem darin angeordneten Filter 5 bestehende Baueinheit vorgesehen, die der Filterung der in der Brennkammer 1 erzeugten Gase und dem gezielten Einleiten dieser Gase in einen aufzublasenden Gassack dient.

Geeignete Diffusor-Typen mit denen aus einem Gasgenerator freigesetztes Gas in einen aufzublasenden Gassack geleitet werden kann, sind bekannt. Eine Besonderheit besteht hier darin, dass die zur Filterung jenes Gases vorgesehene Filtereinrichtung 5 nicht in der Brennkammer 1 sondern außerhalb der Brennkammer angeordnet und mit dem Diffusor 6 zu einer Baugruppe zusammengefasst ist.

Das Hitzeschild 4 und der Diffusor 6 weisen jeweils einen Befestigungsflansch mit Befestigungsöffnungen 45, 65 auf, über die das Hitzeschild 4 und der Diffusor 6 - zusammen mit der zwischen dem Hitzeschild 4 und dem Diffusor 6 liegenden Filtereinrichtung 5 - durch geeignete Befestigungsmittel, z. B. in Form von Schrauben S, im Inneren des Modulgehäuses an dessen Gehäuseboden 30 und damit auch an der Gehäuseaufnahme 2 befestigbar sind.

Im Ergebnis sind somit das Hitzeschild 4, die Filtereinrichtung 5 und der Diffusor 6 jeweils außerhalb der Brennkammer 1 angeordnet, und zwar von dem Brennkammergehäuse 10 beabstandet hinter der äußeren Oberfläche 22 der Gehäuseaufnahme 2 und sind dabei zu einer Baueinheit zusammengefasst, die über gemeinsame Befestigungsmittel S am Modulgehäuse 3, genauer an dessen Gehäuseboden 30, festgelegt ist.

Zum Auslösen der in den Fig. 1a bis 3b dargestellten Aufblaseinrichtung, d. h. um hiermit ein Gas zu erzeugen, mit dem ein im Modulgehäuse 3 angeordneter, zu einem Gassackpaket zusammengestauchter Gassack aufgeblasen werden kann, wird die Zündeinrichtung 7 in bekannter Weise elektrisch aktiviert, wobei die elektrische Aktivierung der Zündeinrichtung 7 z. B. durch einen Crash- oder Pre-Crash-Sensor herbeigeführt wird. Mittels der Zündeinrichtung 7 wird der innerhalb der Brennkammer 1 vorgesehene Gassatz in Form einer Feststoffladung L gezündet, so dass dieser abbrennt und hierbei in der mittels des Brennkammergehäuses 10 und einer Stirnseite 73 des Anzündergehäuses 70 dicht verschlossenen Brennkammer 1 ein Gas erzeugt. Der hierbei schließlich innerhalb der Brennkammer 1 entstehende Gasdruck (Innendruck) ist so groß, dass das dünnwandige Brennkammergehäuse 10 diesem nicht Stand halten kann und unter der Wirkung des Innendruckes substanziell verformt würde bzw. im vorliegenden Ausführungsbeispiel sogar zerbersten würde. Dies wird aber dadurch verhindert, dass das Brennkammergehäuse 10 in einer am Modulgehäuse 3 ausgebildeten (einstückig angeformten) Gehäuseaufnahme 2 angeordnet ist, an der sich das Brennkammergehäuse 10 nach außen abstützen kann.

Lediglich angrenzend an die Durchtrittsöffnungen 28 der Gehäuseaufnahme 2 zerbirst das Brennkammergehäuse 10 in kleineren Teilbereichen (Austrittsbereichen), so dass dort Austrittsöffnungen 18 gebildet werden, die sich mit den Durchtrittsöffnungen 28 der Gehäuseaufnahme 2 überdecken. So kann das in der Brennkammer 1 erzeugte Gas durch die brennkammerseitigen Austrittsöffnungen 18 und die gehäuseaufnahmeseitigen Durchtrittsöffnungen 28 sowie über Durchgangsöffnungen eines dahinter angeordneten Hitzeschildes 4, die Filtereinrichtung 5 und den Diffusor 6 in den aufzublasenden Gassack gelangen.

Die Durchtrittsöffnungen 28 der Gehäuseaufnahme 2 dienen dabei gleichzeitig als eine (außerhalb der Brennkammer 1 angeordnete) Drosselvorrichtung zur Steuerung des Abbrandes in der Brennkammer 1 und somit zur Steuerung der Leistung des Gesamtsystems. Maßgeblich ist hierbei der engste Querschnitt einer jeweiligen Durchtrittsöffnung 28.

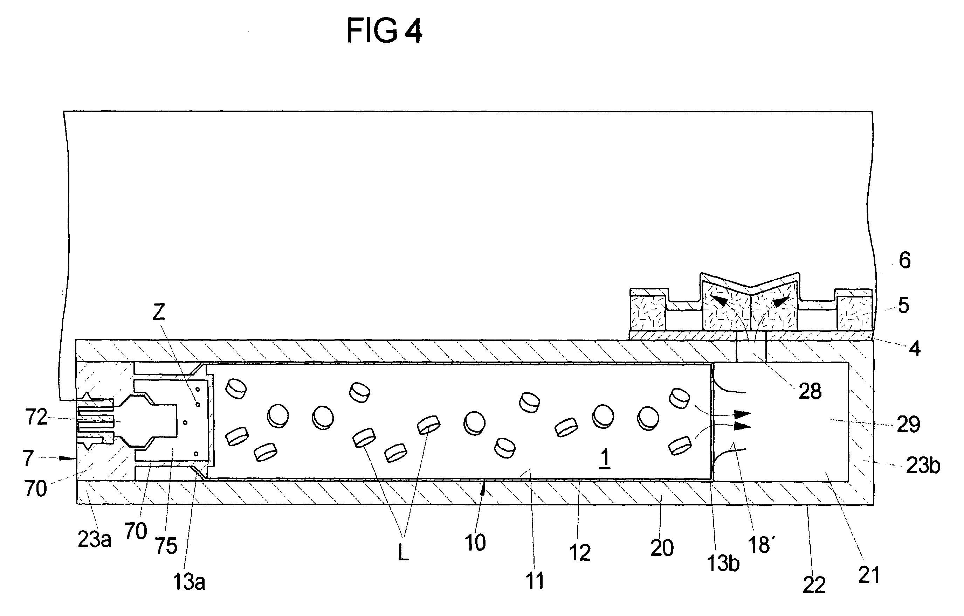

In Figur 4 ist eine Abwandlung der Anordnung aus den Figuren 1a bis 3b dargestellt, bei der mindestens eine sich im Brennkammergehäuse 10 (unter Gasdruck) bildende Austrittsöffnung 18' nicht - wie im Fall der Figuren 1a bis 3b - in der Mantelfläche des Brennkammergehäuses 10 sondern vielmehr derart an einer Stirnseite 13b des Brennkammergehäuses 10 vorgesehen ist, dass die in der Brennkammer 1 erzeugten Gase hieraus entlang der durch die Brennkammer 1 definierten Rohrachse A austreten können.

Während also bei dem zuvor erörterten Ausführungsbeispiel die Austrittsöffnungen 18 des Brennkammergehäuses 10 jeweils an dessen Mantelfläche so gebildet werden, dass die Gase aus jenen Austrittsöffnungen 18 jeweils in radialer Richtung bezogen auf die durch das Brennkammergehäuse 10 definierte Rohrachse A austreten, ist bei dem in Figur 4 gezeigten Ausführungsbeispiel mindestens eine Austrittsöffnung 18' derart stirnseitig am Brennkammergehäuse 10 angeordnet, dass in der Brennkammer 1 erzeugte Gase durch diese Austrittsöffnung 18' in axialer Richtung (entlang der Rohrachse A) austreten können. Sie gelangen dann in eine an einer Stirnseite 23b der Gehäuseaufnahme 2 vorgesehene Kammer 24, aus der sie durch mindestens eine gehäuseaufnahmeseitige Durchtrittsöffnung 28 (in radialer Richtung) in einen aufzublasenden Gassack strömen können, und zwar wiederum über ein Hitzeschild 4, einen Filter 5 und einen Diffusor 6. Die besagte Kammer 24 liegt dabei benachbart neben der Stirnseite 13b des Brennkammergehäuses 10, in der aufgrund des Gasdruckes in der Brennkammer 1 erzeugter Gase die mindestens eine brennkammergehäuseseitige Austrittsöffnung 18' gebildet wird.

Zusammenfassend enthalten die vorstehend anhand der Figuren 1a bis 4 beschriebenen Aufblaseinrichtungen jeweils eine rohrförmige (zylindrische) Brennkammer mit einem pyrotechnischen Gassatz, die durch ein dünnwandiges Brennkammergehäuse, z. B. bestehend aus Metall, umschlossen ist, so dass insbesondere ein gegen Schmutz und Feuchtigkeit abgedichteter Innenraum zur Aufnahme des pyrotechnischen Gassatzes gebildet wird. In der Brennkammer selbst müssen weder eine Filtereinrichtung noch eine Drosselvorrichtung zur Steuerung des Abbrandes des Gassatzes vorgesehen sein. Ferner ist der Brennkammer eine separate Zündeinrichtung zugeordnet.

Wegen seiner dünnwandigen Ausgestaltung kann das Brennkammergehäuse dem Innendruck in der Brennkammer, der bei Abbrand des pyrotechnischen Gassatzes und der hiermit verbundenen Erzeugung eines Gases auftritt, nicht standhalten. Eine Zerstörung des Brennkammergehäuses durch den bei Erzeugung eines Gases in der Brennkammer auftretenden Innendruck wird jedoch dadurch vermieden, dass die Brennkammer zusammen mit der zugeordneten Zündeinrichtung in eine an einem Modulgehäuse ausgebildete Gehäuseaufnahme eingesetzt ist, an der die Brennkammer mit ihrem Gehäuse anliegt und sich abstützt.

Das Brennkammergehäuse zerbirst daher beim Abbrennen des pyrotechnischen Gassatzes zur Erzeugung eines Gases lediglich gezielt an denjenigen Teilbereichen (Austrittsbereichen), an die die gehäuseaufnahmeseitige Durchtrittsöffnungen für das in der Brennkammer erzeugte Gas grenzen, so dass in diesen Austrittsbereichen Austrittsöffnungen gebildet werden, die sich mit den gehäuseaufnahmeseitigen Durchtrittsöffnungen überdecken. Die gehäuseaufnahmeseitigen Durchtrittsöffnungen bzw. genauer deren engster Querschnitt bildet dabei eine Drosselvorrichtung zur Steuerung des Abbrandes in der Brennkammer und somit zur Steuerung der Leistung des Gesamtsystems.

Nachdem die in der Brennkammer erzeugten Gase durch die brennkammerseitigen Austrittsöffnungen und die gehäuseaufnahmeseitigen Durchtrittsöffnungen in Richtung auf einen aufzublasenden Gassack ausgetreten sind, durchströmen sie eine Filtereinrichtung, die außerhalb der Brennkammer an der Gehäuseaufnahme angeordnet ist, und zwar an der der Brennkammer abgewandten Außenseite der Gehäuseaufnahme. Dieser Filter kann in geometrischer Hinsicht symmetrisch oder auch asymmetrisch und ungerichtet ausgeführt sein, wobei die Geometrie der Filtereinrichtung insbesondere an die Gehäuseaufnahme anpassbar ist. Zur Bildung einer Filtereinrichtung eignen sich beispielsweise Streckmetall, ein Drahtgestrick usw.

Der Filter ist mit einem Diffusor zu einer Baueinheit zusammengefasst, der zum gezielten Einleiten der aus der Brennkammer freigesetzten Gase in einen aufzublasenden Gassack gilt, dient und wird über geeignete Befestigungsmittel, z. B. in Form von Schrauben am (aus Kunststoff oder Metall bestehenden) Modulgehäuse und somit an der daran angeformten Gehäuseaufnahme befestigt, wobei die Befestigung des Diffusors und der Filtereinrichtung am Modulgehäuse gleichzeitig auch zur klemmenden Fixierung des aufzublasenden Gassackes G dienen kann, vergl. Figur 2b.

Die aus der Filtereinrichtung und dem Diffusor bestehende Baueinheit kann bei Bedarf durch ein Hitzeschild erweitert werden, das z. B. zwischen der Gehäuseaufnahme und jener Baueinheit angeordnet wird, um einen Schutz vor der mit ausströmenden heißen Gasen verbundenen Wärme zu bieten.

## Patentansprüche

1. Aufblaseinrichtung für ein Airbagmodul eines Kraftfahrzeugs, mit
- einer Brennkammer (1) zur Aufnahme eines Gassatzes, aus dem ein Gas zum Aufblasen eines Gassackes erzeugbar ist, und
- einem Brennkammergehäuse (10), das einen Innenraum der Brennkammer umschließt, in dem der Gassatz aufgenommen ist,
**dadurch gekennzeichnet,**
**dass** das Brennkammergehäuse (10) so ausgeführt ist, dass es dem Druck, der in der Brennkammer (1) bei bestimmungsgemäßer Erzeugung eines Gases auftritt, nicht standhalten kann, und dass das Brennkammergehäuse (10) von einer Gehäuseaufnahme (2) derart umschlossen ist, dass sich das Brennkammergehäuse (10) an der Gehäuseaufnahme (2) abstützen kann, um ein Verformen oder Zerbersten des Brennkammergehäuses (10) bei bestimmungsgemäßer Erzeugung eines Gases in der Brennkammer (1) zu verhindern und dass die Gehäuseaufnahme (2) Bestandteil eines Modulgehäuses (3) zur Aufnahme mindestens eines Gassackes des Airbagmodules ist und wobei die Gehäuseaufnahme (2) einstückig am Modulgehäuse (3) angeformt ist.

2. Aufblaseinrichtung nach Anspruch 1 , **dadurch gekennzeichnet, dass** das Brennkammergehäuse (10) derart dünnwandig ausgeführt ist, dass es dem Druck, der in der Brennkammer (1) bei bestimmungsgemäßer Erzeugung eines Gases auftritt, nicht standhalten kann.

3. Aufblaseinrichtung nach Anspruch 1 oder Anspruch 2, **dadurch gekennzeichnet, dass** das Brennkammergehäuse (10) den Innenraum der Brennkammer (1) gasdicht umschließt.

4. Aufblaseinrichtung nach Anspruch 3, **dadurch gekennzeichnet, dass** das Brennkammergehäuse (10) den Innenraum der Brennkammer (1) zusammen mit einem Anzündergehäuse (70) einer Zündeinrichtung (7) gasdicht umschließt.

5. Aufblaseinrichtung nach einem der vorhergehenden Ansprüche, **dadurch gekennzeichnet, dass** das Brennkammergehäuse (10) mindestens einen Austrittsbereich umfasst, um in der Brennkammer (1) erzeugtes Gas aus der Brennkammer (1) austreten lassen zu können.

6. Aufblaseinrichtung nach Anspruch 5, **dadurch gekennzeichnet, dass** in dem Austrittsbereich des Brennkammergehäuses (10) mindestens eine Austrittsöffnung (18) unter der Wirkung des Gasdruckes gebildet wird, der beim bestimmungsgemäßen Erzeugen eines Gases in der Brennkammer (1) auftritt.

7. Aufblaseinrichtung nach Anspruch 6, **dadurch gekennzeichnet, dass** die mindestens eine Austrittsöffnung (18) durch lokal begrenztes Zerbersten des Brennkammergehäuses (10) unter der Wirkung des Druckes gebildet ist, der beim bestimmungsgemäßen Erzeugen eines Gases in der Brennkammer (1) auftritt.

8. Aufblaseinrichtung nach Anspruch 7, **dadurch gekennzeichnet, dass** die mindestens eine Austrittsöffnung (18) gezielt an einem Austrittsbereich des Brennkammergehäuses (10) gebildet ist, der nicht an der Gehäuseaufnahme (2) abgestützt ist.

9. Aufblaseinrichtung nach einem der vorhergehenden Ansprüche, **dadurch gekennzeichnet, dass** die Gehäuseaufnahme (2) mindestens eine Durchtrittsöffnung (28) aufweist, durch die hindurch in der Brennkammer (1) erzeugtes Gas in einen aufzublasenden Gassack gelangen kann.

10. Aufblaseinrichtung nach Anspruch 8 und 9, **dadurch gekennzeichnet, dass** die mindestens eine Austrittsöffnung (18) durch lokal begrenztes Zerbersten des Brennkammergehäuses (10) an einem Austrittsbereich gebildet ist, der an eine Durchtrittsöffnung (28) der Gehäuseaufnahme (2) grenzt.

11. Aufblaseinrichtung nach einem der vorhergehenden Ansprüche, **dadurch gekennzeichnet, dass** die Gehäuseaufnahme (2) Bestandteil einer Kraftfahrzeugkarosserie oder einer Innenverkleidung eines Kraftfahrzeugs, insbesondere einer Instrumententafel oder einer Türinnenverkleidung, ist.

12. Aufblaseinrichtung nach einem der vorhergehenden Ansprüche, **dadurch gekennzeichnet, dass** außerhalb der Brennkammer (1) eine Filtereinrichtung (5) zum Filtern des in der Brennkammer (1) erzeugten Gases vorgesehen ist, wobei die Filtereinrichtung (5) mit einem Diffusor (6) zu einer Baueinheit zusammengefasst ist, wobei der Diffusor (6) zum Einleiten des in der Brennkammer (1) erzeugten Gases in einen aufzublasenden Gassack dient.

13. Aufblaseinrichtung nach einem der Ansprüche 9 bis 12, **dadurch gekennzeichnet, dass** außerhalb der Brennkammer (1) an der Gehäuseaufnahme eine Drosselvorrichtung zum Steuern des Abbrandes des Gassatzes beim bestimmungsgemäßen Erzeugen eines Gases vorgesehen ist, wobei die Drosselvorrichtung durch mindestens eine Durchtrittsöffnung (28) der Gehäuseaufnahme (2) gebildet wird.

14. Aufblaseinrichtung nach einem der vorhergehenden Ansprüche, **dadurch gekennzeichnet, dass** der Brennkammer (1) eine Zündeinrichtung (7) zum Zünden des in der Brennkammer (1) vorgesehenen Gassatzes (L) zugeordnet ist, die eine von der Brennkammer (1) separate Baueinheit bildet, wobei die Zündeinrichtung (7) mit dem Brennkammergehäuse (10) verbunden ist und gemeinsam mit der Brennkammer (1) in der Gehäuseaufnahme (2) angeordnet ist.

15. Aufblaseinrichtung nach Anspruch 6 oder einem der Ansprüche 7 bis 14, soweit rückbezogen auf Anspruch 6, **dadurch gekennzeichnet, dass** das Brennkammergehäuse (10) lediglich in solchen Teilbereichen nicht abgestützt ist, an denen unter der Wirkung des bestimmungsgemäß in der Brennkammer (1) erzeugten Gases Austrittsöffnungen (18) des Brennkammergehäuses (10) gebildet werden sollen.

## Claims

1. Inflator device for an airbag module of a motor vehicle with
- a combustion chamber (1) for receiving a gas charge, from which a gas for inflating a gasbag can be generated, and
- a combustion chamber housing (10), which encloses an internal space of the combustion chamber, in which the gas charge is housed,
**characterized in that**
the combustion chamber housing (10) is designed such, that it cannot withstand the pressure that develops in the combustion chamber (1) upon intended generation of gas and that the combustion chamber housing (10) is enclosed by a housing receptacle (2) such, that the combustion chamber housing (10) can be supported on the housing receptacle (2) in order to prevent a deformation or a break-up of the combustion chamber housing (10) upon intended generation of gas in the combustion chamber (1) and that the housing receptacle (2) is part of a module housing (3) for receiving at least one gas bag of the airbag module and wherein the housing receptacle is formed on the module housing in one-piece.

2. Inflator device according to claim 1, **characterized in that** the combustion chamber housing (10) is designed so thin-walled that it cannot withstand the pressure that develops in the combustion chamber (1) upon intended generation of gas.

3. Inflator device according to one claim 1 or claim 2, **characterized in that** the combustion chamber housing (10) encloses the internal space of the combustion chamber (1) in gas-tight manner.

4. Inflator device according to claim 3, **characterized in that** the combustion chamber housing (10) encloses the internal space of the combustion chamber (1) together with a igniter housing (70) of an igniter device (7) in a gas tightly manner.

5. Inflator device according to one of the preceding claims, **characterized in that** the combustion chamber housing (10) comprises at least one outlet area in order to may let out gas generated in the combustion chamber (1) from the combustion chamber (1).

6. Inflator device according to claim 5, **characterized in that** at least one outlet opening is formed in the outlet area of the combustion chamber housing (10) under the influence of the gas pressure that develops in the combustion chamber (1), upon intended generation of gas in the combustion chamber (1).

7. Inflator device according to claim 6, **characterized in that** the at least one outlet opening (18) is formed by a locally limited break-up of the combustion chamber housing (10) under the influence of the pressure that develops in the combustion chamber upon intended generation of gas in the combustion chamber (1).

8. Inflator device according to claim 7, **characterized in that** the at least one outlet opening (18) is intentionally formed at an outlet area of the combustion chamber housing (10) which is not supported on the housing receptacle (2).

9. Inflator device according to one of the preceding claims, **characterized in that** the housing receptacle (2) has at least one through opening (28) through which gas that has been generated in the combustion chamber (1) can pass into a gas bag to be inflated.

10. Inflator device according to claims 8 and 9, **characterized in that** the at least one outlet opening (18) is formed by a locally limited break-up of the combustion chamber housing (10) in a outlet area which adjoins a through opening (28) of the housing receptacle (2).

11. Inflator device according to one of the preceding claims, **characterized in that** the housing receptacle (2) is part of a motor vehicle body or interior lining of a motor vehicle, in particular of an instrument panel or an interior lining of a door.

12. Inflator device according to one of the preceding claims, **characterized in that** a filter device (5) for filtering the gas generated in the combustion chamber (1) is provided outside the combustion chamber (1), wherein the filter device (5) is combined with a diffuser (6) to form a unit, wherein the diffuser (6) serves for introducing the gas that is generated in the combustion chamber (1) into a gas bag to inflated.

13. Inflator device according to one of the claims 9 to 12, **characterized in that** a throttle device (28) is provided outside the combustion chamber (1) at the housing receptacle for controlling the combustion of the gas charge upon generation of gas according to its intended purposes, wherein the throttle device (28) is formed by at least one through-opening (28) of the housing receptacle (2).

14. Inflator device according to one of the preceding claims, **characterized in that** a igniter device (7), which forms a unit separate from the combustion chamber (1), for igniting a gas charge (L) provided in the combustion chamber (1) is assigned to the combustion chamber (1), wherein the igniter device (7) is connected to the combustion chamber housing (10) and is arranged together with the combustion chamber (1) in the housing receptacle (2).

15. Inflator device according to claim 6 or one of the claims 7 to 14, insofar as referring back to claim 6, **characterized in that** the combustion chamber housing (10) is not support in merely such portions, on which outlet openings (18) of the combustion chamber housing (10) shall be formed under the influence of a gas generated as intended in the combustion chamber (1).

## Revendications

1. Dispositif de gonflage pour un module d'airbag d'un véhicule automobile, comprenant
- une chambre de combustion (1) pour la réception d'un kit à gaz, à partir duquel un gaz peut être engendré pour gonfler un coussin gonflable, et
- un boîtier de chambre de combustion (10), qui entoure un volume intérieur de la chambre à combustion et dans lequel est reçu le kit à gaz,
**caractérisé en ce que**
le boîtier de chambre de combustion (10) est ainsi réalisé qu'il n'est pas capable de résister à la pression qui apparaît dans la chambre de combustion (1) lors de la production d'un gaz conformément aux dispositions, et **en ce que** le boîtier de chambre de combustion (10) est enfermé par un logement de boîtier (2) de telle façon que le boîtier de chambre de combustion (10) est capable de s'appuyer contre le logement de boîtier (2) afin d'empêcher une déformation ou un éclatement du boîtier de chambre de combustion (10) lors de la production d'un gaz, conformément aux dispositions, dans la chambre de combustion (1), et **en ce que** le logement de boîtier (2) est un élément constitutif d'un boîtier de module (3) pour recevoir au moins un coussin gonflable du module d'airbag, et dans lequel le logement de boîtier (2) est conformé d'une seule pièce sur le boîtier de module (3).

2. Dispositif de gonflage selon la revendication 1, **caractérisé en ce que** le boîtier de chambre de combustion (10) est réalisé avec des parois aussi minces qu'il n'est pas capable de résister à la pression qui apparaît dans la chambre de combustion (1) lors de la production d'un gaz conformément aux dispositions.

3. Dispositif de gonflage selon la revendication 1 ou 2, **caractérisé en ce que** le boîtier de chambre de combustion (10) entoure le volume intérieur de la chambre de combustion (1) de manière étanche aux gaz.

4. Dispositif de gonflage selon la revendication 3, **caractérisé en ce que** le boîtier de chambre de combustion (10) entoure le volume intérieur de la chambre de combustion (1) conjointement avec un boîtier d'allumage (70) d'un dispositif d'allumage (7) de manière étanche aux gaz.

5. Dispositif de gonflage selon l'une des revendications précédentes, **caractérisé en ce que** le boîtier de chambre de combustion (10) comprend au moins une zone de sortie afin de pouvoir laisser sortir hors de la chambre de combustion (1) le gaz produit dans la chambre de combustion (1).

6. Dispositif de gonflage selon la revendication 5, **caractérisé en ce qu'**au moins une ouverture de sortie (18) est formée dans la zone de sortie du boîtier de chambre de combustion (10) sous l'action de la pression du gaz qui apparaît lors de la production, conformément aux dispositions, d'un gaz dans la chambre de combustion (1).

7. Dispositif de gonflage selon la revendication 6, **caractérisé en ce que** ladite au moins une ouverture de sortie (18) est formée par éclatement limité local du boîtier de chambre de combustion (10) sous l'action de la pression qui apparaît lors de la production, conformément aux dispositions, d'un gaz dans la chambre de combustion (1).

8. Dispositif de gonflage selon la revendication 7, **caractérisé en ce que** ladite au moins une ouverture de sortie (18) est formée de manière ciblée au niveau d'une zone de sortie du boîtier de chambre de combustion (10) qui n'est pas soutenue contre le logement de boîtier (2).

9. Dispositif de gonflage selon l'une des revendications précédentes, **caractérisé en ce que** le logement de boîtier (2) comporte au moins une ouverture traversante (28) à travers laquelle le gaz produit dans la chambre de combustion (1) peut parvenir dans un coussin gonflable qu'il s'agit de gonfler.

10. Dispositif de gonflage selon la revendication 8 et 9, **caractérisé en ce que** ladite au moins une ouverture de sortie (18) est formée par éclatement limité local du boîtier de chambre de combustion (10) au niveau d'une zone de sortie qui est adjacente à une ouverture traversante (28) du logement de boîtier (2).

11. Dispositif de gonflage selon l'une des revendications précédentes, **caractérisé en ce que** le logement de boîtier (2) est un élément constitutif d'une carrosserie de véhicule automobile ou d'un habillage intérieur d'un véhicule automobile, en particulier un tableau de bord ou un habillage de porte.

12. Dispositif de gonflage selon l'une des revendications précédentes, **caractérisé en ce qu'**il est prévu à l'extérieur de la chambre de combustion (1) un dispositif de filtration (5) pour filtrer le gaz produit dans la chambre de combustion (1), ledit dispositif de filtration (5) étant groupé avec un diffuseur (6) pour former une unité structurelle, le diffuseur (6) servant à amener le gaz produit dans la chambre de combustion (1) vers un coussin gonflable qu'il s'agit de gonfler.

13. Dispositif de gonflage selon l'une des revendications 9 à 12, **caractérisé en ce qu'**il est prévu à l'extérieur de la chambre de combustion (1) au niveau du logement de boîtier un dispositif à étranglement pour piloter la combustion du kit à gaz lors de la production, conforme à sa destination, d'un gaz, ledit dispositif à étranglement étant formé par au moins une ouverture traversante (28) du logement de boîtier (2).

14. Dispositif de gonflage selon l'une des revendications précédentes, **caractérisé en ce qu'**un dispositif d'allumage (7) pour allumer le kit à gaz (L) prévu dans la chambre de combustion (1) est associé à la chambre de combustion (1), ce dispositif formant une unité structurelle séparée de la chambre de combustion, et le dispositif d'allumage (7) est relié au boîtier de chambre de combustion (10) et est agencé dans le logement de boîtier (2) conjointement avec la chambre de combustion (1).

15. Dispositif de gonflage selon la revendication 6, ou selon l'une des revendications 7 à 14 dans la mesure où elles dépendent de la revendication 6, **caractérisé en ce que** le boîtier de chambre de combustion (10) n'est pas soutenu uniquement dans celles des zones partielles au niveau desquelles des ouvertures de sortie (18) du boîtier de chambre de combustion (10) doivent être formées sous l'action du gaz produit, conformément aux dispositions, dans la chambre de combustion (1).
